Europäisches Patentamt

European Patent Office

Office européen des brevets

(11) Veröffentlichungsnummer: **0 298 246 B1**

(12) **EUROPÄISCHE PATENTSCHRIFT**

(45) Veröffentlichungstag der Patentschrift: **11.03.92**

(21) Anmeldenummer: **88108575.7**

(22) Anmeldetag: **28.05.88**

(51) Int. Cl.⁵: **H01B 3/44**, C08K 3/22, C08L 23/08

(54) **Kriechstromfest isolierende Formteile.**

(30) Priorität: **08.07.87 DE 3722480**

(43) Veröffentlichungstag der Anmeldung:
**11.01.89 Patentblatt 89/02**

(45) Bekanntmachung des Hinweises auf die
Patenterteilung:
**11.03.92 Patentblatt 92/11**

(84) Benannte Vertragsstaaten:
**AT BE CH DE ES FR GB GR IT LI NL SE**

(56) Entgegenhaltungen:
**EP-A- 0 038 713      EP-A- 0 103 121**
**EP-A- 0 145 213      EP-A- 0 221 449**
**GB-A- 2 035 333      US-A- 4 549 041**

(73) Patentinhaber: **kabelmetal electro GmbH**
**Kabelkamp 20 Postfach 260**
**W-3000 Hannover 1(DE)**

(72) Erfinder: **Hanisch, Ferdinand, Dr. rer. nat.**
**Gorch-Fock-Weg 40**
**W-3006 Burgwedel 1(DE)**
Erfinder: **Winter, Richard**
**Lilienstrasse 10**
**W-3057 Neustadt 2(DE)**

**Beschreibung**

Die vorliegende Erfindung betrifft kriechstromfeste isolierende Formteile, insbesondere Kabel- und Leitungszubehör, wie Kappen, Verbindungsmuffen und Endverschlüsse aus thermoplastischen oder elastomeren Werkstoffen, allein oder in Kombination.

Für Endenabschlüsse von elektrischen Hochspannungskabeln sind bereits kriechstromfeste Schrumpfschläuche bekannt (DE-OS 35 11 299), die aus einem Polyethylen-Copolymer hergestellt sind und als kriechstromfest machende Zusätze Aluminiumoxidhydrat und Eisenoxid enthalten. Schwierigkeiten können sich ergeben, wenn solche Endenabschlüsse, aber auch beliebige andere kriechformfeste Formteile, etwa Kappen oder Muffen, im Freien verwendet werden sollen. Denn in diesen Fällen tritt als weitere Forderung die nach einer ausreichenden Licht- oder UV-Beständigkeit der eingesetzten Werkstoffe hinzu. Für solche Zwecke werden bekanntlich Ruße verwendet, bei Aluminiumoxidhydrat und Eisenoxid enthaltenden Formteilen führt jedoch die Zugabe von Rußen zu einer Minderung der Kriechstromfestigkeit.

Der Erfindung liegt daher die Aufgabe zugrunde, auch im Freien zu verwendende Formteile, die gegen den Abbau infolge von UV-Strahlung und Lichteinwirkung durch Ruß stabilisiert sind, kriechstromfest zu machen.

Gelöst wird diese Aufgabe gemäß der Erfindung dadurch, daß die Formteile Magnesiumhydroxid allein oder in Kombination mit anderen Metalloxiden, Metallhydroxiden oder Hydraten enthalten, wobei das Magnesiumhydroxid überwiegender Kriechstromfestmacher ist. Diese Maßnahme ermöglicht einen erweiterten Einsatzbereich kriechstromfester Formteile. So können nach der Erfindung ausgebildete Formteile beispielsweise die Mäntel elektrischer Luftkabel mit einer Lichtwellenleiter enthaltenden Seele sein, die im Bereich der Energieversorgung durch Hochspannungs-Freileitungsnetze zur Nachrichtenübermittlung vorgesehen sind (ETZ 105, 1985 Heft 4 S. 154ff). Diese Mäntel können aus einem thermoplastischen Werkstoff bestehen, der durch Magnesiumhydroxid kriechstromfest gemacht ist, oder auch, wie in Weiterführung der Erfindung vorgesehen, aus einem vernetzten Polymeren.

Insbesondere in vernetztem Zustand werden erfindungsgemäße Formteile mit Vorteil zur kriechstromfesten Isolierung an Endenabschlüssen oder Verbindungsmuffen für elektrische Kabel eingesetzt, wobei diese Formteile z.B. Schläuche oder Kappen sind.

Wie bereits ausgeführt, ist für die Erfindung wesentlich, daß das Magnesiumhydroxid im Formteil der überwiegende kriechstromfestmachende Füllstoff ist. So können zwar, falls erwünscht, z.B. auch Aluminiumoxidhydrat und/oder Eisenoxid in der als Werkstoff verwendeten Mischung enthalten sein, der Anteil des überwiegend vorhandenen Magnesiumhydroxids wird jedoch in Durchführung der Erfindung 10 - 80 Teile, vorzugsweise 20 - 60 Teile, bezogen auf 100 Teile Basiswerkstoff, betragen. Aus solchen Mischungen bergestellte kriechstromfeste Formteile sind für die Verwendung in gegen äußere Einflüsse geschützten Räumen geeignet, für die sog. Freiluftverwendung ist ein bestimmter Rußanteil aus den oben genannten Gründen zusätzlich wünschenswert, der in Weiterführung der Erfindung 2 - 15 Teile, vorzugsweise 4 - 10 Teile, bezogen auf 100 Teile Basiswerkstoff, beträgt. Neben Normalrußen können u.a. auch Acetylen-Ruße verwendet werden, wie sie unter dem Handelsnamen Shawinigan-Ruß, Akzo-Ruß Ketjen black EC und Azetylen schwarz Y bekannt sind.

Vorteilhaft bestehen die nach der Erfindung ausgebildeten Formteile aus vernetzten Werkstoffen. Die Vernetzung des Basismaterials trägt zur Verbesserung der mechanischen Eigenschaften, z.B. der Wärmestandfestigkeit, des Formteiles bei, sie ist aber auch Voraussetzung dann, wenn, wie in Durchführung der Erfindung vorgesehen, diese Formteile schrumpffähig sein sollen. Schrumpffähig bedeutet hier, daß die Formteile, wie Kappen, Schläuche, Bänder und dergl. nach einem Aufweiten oder Recken der extrudierten oder gespritzten Form während einer Temperaturbehandlung mit anschließendem "Einfrieren" dieses aufgeweiteten oder gereckten Zustandes wieder in den ursprünglichen Zustand (Form und Abmessung) zurückgeführt werden, wenn der "eingefrorene" Zustand durch eine erneute Temperaturbehandlung aufgehoben wird.

Die Vernetzung der verwendeten Basiswerkstoffe kann auf unterschiedliche Weise erfolgen, je nach äußerer Form, Abmessung und Werkstoffzusammensetzung wird man der einen oder anderen Vernetzungsart den Vorzug geben. So kann die Vernetzung des jeweiligen Basiswerkstoffes durch Einwirkung energiereicher Strahlen erfolgen, wobei zu berücksichtigen ist, daß die vom sog. Scanner abgegebene Energie eine tiefenabhängige Vernetzungsdichte bewirkt, die Vernetzungsdichte nimmt von außen nach innen ab.

Durch Zugabe ausreichender Peroxidmengen kann die Vernetzung auch durch Wärmeeinwirkung erfolgen, aber auch in ebenfalls bekannter Weise dadurch, daß zunächst auf den jeweiligen Basiswerkstoff ungesättigte Organosilane aufgepfropft werden, und daß aus diesem Werkstoff hergestellte Formteile schließlich der Einwirkung von Feuchtigkeit ausgesetzt werden. Zu diesem Zweck werden zweckmäßig solche Organosilane verwendet, die Vinylgruppen enthalten. Insbesondere diese Vernetzungsart hat sich für

2

die Zwecke der Erfindung als problemloses und kostengünstiges Herstellungsverfahren erwiesen.

In Durchführung der Erfindung hat es sich ferner als vorteilhaft erwiesen, wenn statt reiner homopolymerer Werkstoffe Copolymerisate verwendet werden. So haben sich beispielsweise Copolymerisate des Ethylens mit einem Acetatanteil von 5 - 35 Gew.% bzw. einem Acrylatanteil von 3 - 20 Gew.% als zweckmäßig erwiesen, da sie mit Zusätzen weitgehend problemlos füllbar sind.

Eine weitere vorteilhafte Variante der Erfindung ergibt sich dann, wenn als Basiswerkstoffe Polymergemische (Poly-blends) aus Copolymerisaten des Ethylens sowie Ethylen-Propylen-Kautschuke verwendet werden. Solche Werkstoffkombinationen führen zu besonders günstigen Produkteigenschaften.

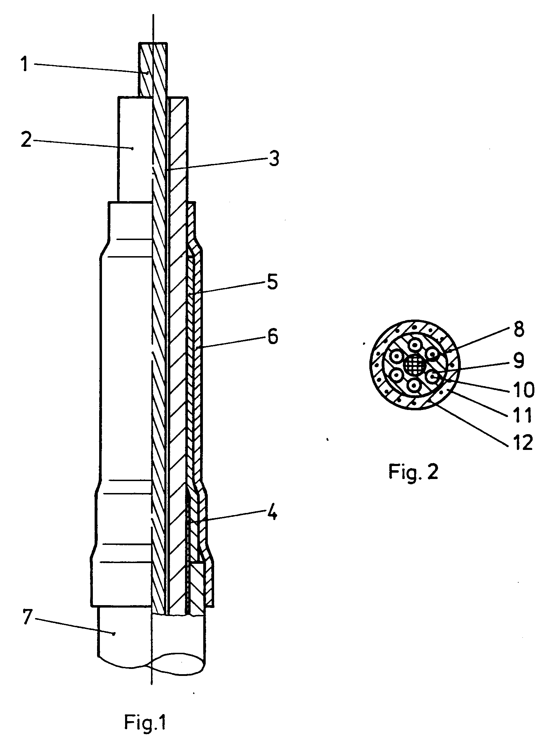

Die Erfindung sei an Hand der nach folgenden Mischungsbeispiele sowie der in den Fig. 1 und 2 dargestellten Ausführungsbeispiele näher erläutert.

| | Teile | Teile | Teile | Teile | Teile |
|---|---|---|---|---|---|
| Polyethylen-Copolymerisat (Acetat-Anteil 15 Gew.%) | 100 | 50 | 100 | 100 | 100 |
| Ethylen-Propylen-Kautschuk | - | 50 | - | - | - |
| Magnesiumhydroxid | 50 | 50 | 50 | 50 | - |
| Eisenoxid | 5 | 5 | 2 | - | 5 |
| ATH (Aluminiumhydroxid) | - | - | - | - | 50 |
| Ruß | 5 | 5 | 5 | 5 | 5 |
| Verarbeitungshilfen, Gleitmittel | 3 | 3 | 3 | 3 | 3 |
| Stabilisator | 0,8 | 0,8 | 0,8 | 0,8 | 0,8 |
| Peroxid | 0,5 | 0,5 | 0,5 | 0,5 | 0,5 |
| Hochspannungskriechstromfestigkeit nach VDE 57303 | + | + | + | + | - |
| Stufe (kV) | 4,5 | 4,5 | 4,5 | 4,5 | - |

+ = bestanden

- = nicht bestanden

Wie die zugegebene Menge an Vernetzungsmitteln zeigt, sind die genannten Mischungen peroxidisch vernetzbar, hieraus hergestellte Formkörper sind aufgrund des Rußgehaltes auch im Freien vorteilhaft einsetzbar, die geforderte Kriechstromfestigkeit ist gegeben. Wird, wie bereits ausgeführt, das Magnesiumhydroxid in den Beispielen durch Aluminiumoxidhydrat ersetzt, wird die verlangte Kriechstromfestigkeit nicht erreicht. Verzichtet man auf den Ruß, wird zwar die der Prüfung zugrundegelegten Spannung von 4,5 kV gehalten, solche Formteile sind aber für die Freiluftanwendung weniger gut geeignet.

Gegenüber dem Einsatz von Aluminiumoxidhydrat ergeben sich durch die Erfindung noch weitere Vorteile z.B. dadurch, daß das Magnesiumhydroxid erst bei über der Pfropftemperatur von 160 - 240 Grad C liegenden Temperaturen Wasser abspaltet. Das führt im Falle der Vernetzung durch Feuchtigkeitseinwirkung dazu, daß die Herstellung der Formteile, ausgehend von den einzelnen Mischungskomponenten, die im Extruder zusammengeführt werden, in einem Arbeitsgang (on line) erfolgen kann und nicht in einem Zweischrittverfahren, wie bei einem bereits bekannten kriechstromfesten Schrumpfschlauch angegeben (DE-OS 35 11 299).

Die Fig. 1 zeigt die Verwendung eines Formteils nach der Erfindung bei einem Kabelendverschluß für Hochspannungskabel.

Der Leiter 1 des Hochspannungskabels ist von der Isolierung 2 z.B. aus einem vernetzten Polyethylen umgeben, zwischen Leiteroberfläche und Isolierung 2 befindet sich die innere Leitschicht 3. Als Abschirmung 4 dient beispielsweise ein wendelförmig mit Überlappung aufgewickeltes, leitfähiges Gewebeband mit darüber liegendem Kupferband oder auch eine extrudierte Leitschicht.

Zur Erzeugung eines Spannungsabfalls in Längsrichtung durch die während des Betriebes radial in das Kabel eintretenden kapazitiven Ströme und damit zur Herabsetzung der Feldstärke in diesem Bereich dient der auf das abgesetzte Kabelende aufgeschrumpfte, leitfähige Schrumpfschlauch 5 (Steuerschlauch). Dieser Steuerschlauch wird überdeckt von dem nach der Erfindung ausgebildeten kriechstromfesten Schrumpfschlauch 6 aus einem vernetzten Polymermaterial, der den Steuerschlauch 5 überragt und bis über den abgesetzten Kabelmantel 7 hinübergreift.

Die Fig. 2 zeigt ein nach der Erfindung aufgebautes metallfreies Luftkabel mit Lichtwellenleiter (LWL). Hierbei sind um einen isolierenden Kern 8 herum verseilt die Hohladern 9, in denen die Lichtwellenleiter 10 geführt sind. Dieser Verseilverband ist umgeben von der isolierenden Umhüllung 11 (Mantel), die entsprechend der Erfindung z.B. aus einem nach Aufpropfen von Silanen durch Feuchtigkeit vernetzten, kriechstromfesten Polymermaterial besteht. Eine z.B. aus hochfesten Kunststoffäden, etwa auf Basis aromatischer Homo- oder Copolyamide, bestehende Armierung 12 dient der Aufnahme von Zugkräften.

Abweichend von diesem Ausführungsbeispiel können solche Luftkabel auch eine metallische Bewehrung enthalten oder in der Seele unterhalb der Umhüllung metallische Nachrichtenübermittlungsstränge angeordnet sein. Bei der heute praktizierten Anordnung eines Luftkabels mit LWL im Energieversorgungsbereich sind z.B. zwischen den 400 m entfernt stehenden Masten das Erdseil sowie die drei Phasenseile eingespannt. Im Abstand von z.B. 6 m zu den Phasenseilen befindet sich ein entsprechend Fig. 2 aufgebautes Luftkabel, das über metallische und geerdete Aufhängungen an den Masten befestigt ist. Insbesondere im Bereich dieser Aufhängungen ist bei einem metallfreien Luftkabel mit erhöhter Beanspruchung durch auf der Oberfläche der Umhüllung 11 induzierte Kriechströme zu rechnen. Bei entsprechender, im Betrieb unvermeidbarer elektrischer Beanspruchung, durch Schmutz und Feuchtigkeit, Schwingungen des Kabels, besondere Baulichkeiten und dergl., sind jedoch auch andere Kabelabschnitte kriechstromgefährdet. Hier schafft die Erfindung durch den speziellen Mantelaufbau Abhilfe.

Für die Zwecke der Erfindung ist z.B. auch die folgende Mischung geeignet:

Polyethylen            100 Teile
Magnesiumhydroxid            20 - 50 Teile
Ruß            3 Teile
Verarbeitungshilfen, Gleitmittel            3 Teile
Stabilisator            0,8 Teile
Vinyltrimethoxisilan            1,5 Teile
Peroxid            0,05 - 0,2 Teile
Kondensationskatalysator            0,05 Teile

Zur Verarbeitung dieser extrusionsfähigen Mischung durch Ausformen zum End- oder Zwischenprodukt werden alle Komponenten in den Extrudertrichter eingegeben, das Material wird homogenisiert und aufgeschmolzen sowie durch Temperaturanhebung auf Werte zwischen 160 Grad und 250 Grad die Silanverbindung auf das Polymere aufgepfropft. Anschließend erfolgt die Ausformunmg des gepfropften, noch unvernetzten Materials beispielsweiwse zum Mantel 11.

## Patentansprüche

1. Kriechstromfeste, isolierende Formteile, insbesondere Kabel- und Leitungszubehör, wie Kappen, Verbindungsmuffen, Endverschlüsse und dergl. aus thermoplastischen oder elastomeren Werkstoffen allein oder in Kombination, dadurch gekennzeichnet, daß die Formteile Magnesiumhydroxid allein oder in Kombination mit anderen Metalloxiden, Metallhydroxiden oder Hydraten enthalten, wobei das Magnesiumhydroxid überwiegender Kriechstromfestmacher ist und in einer Menge von 10-80 Teilen, vorzugsweise 20-60 Teilen, bezogen auf 100 Teile Basiswerkstoffe vorhanden ist, und daß die Formteile Ruß in einer Menge von 2-15 Teilen, vorzugsweise 4-10 Teilen bezogen auf 100 Teile Basiswerkstoff, enthalten.

2. Formteile nach Anspruch 1, dadurch gekennzeichnet, daß die Basiswerkstoffe vernetzt sind.

3. Formteile nach Anspruch 2, dadurch gekennzeichnet, daß der jeweilige Basiswerkstoff durch Einwirkung energiereicher Strahlen vernetzt ist.

4. Formteile nach Anspruch 2, dadurch gekennzeichnet, daß der jeweilige Basiswerkstoff peroxidisch vernetzt ist.

5. Formteile nach Anspruch 2, dadurch gekennzeichnet, daß der jeweilige Basiswerkstoff nach Aufpfropfen von ungesättigten Organosilanen durch Feuchtigkeitseinwirkung vernetzt ist.

6. Formteile nach Anspruch 5, dadurch gekennzeichnet, daß als ungesättigte Organosilane solche mit Vinylgruppen verwendet sind.

7. Formteile nach Anspruch 2 oder einem der folgenden in Form von Kappen, Schläuchen, Bändern, dadurch gekennzeichnet, daß diese Formteile nach Aufweiten oder Recken während einer Temperaturbehandlung schrumpffähig sind.

8. Formteile nach Anspruch 1 oder einem der folgenden, dadurch gekennzeichnet, daß als Basiswerkstoffe Copolymerisate des Ethylens mit einem Acetatanteil von 5 - 35 Gew.% verwendet sind.

**9.** Formteile nach Anspruch 1 oder einem der folgenden, dadurch gekennzeichnet, daß als Basiswerkstoffe Copolymerisate des Ethylens mit einem Acrylatanteil von 3 - 20 Gew.% verwendet sind.

**10.** Formteile nach Anspruch 1 oder einem der folgenden, dadurch gekennzeichnet, daß als Basiswerkstoffe Polymergemische (Polyblends) aus Copolymerisaten des Ethylens sowie Ethylen-Propylen-Kautschuken verwendet sind.

## Claims

**1.** Tracking-resistant, insulated moulded parts, in particular cable and line accessories, such as caps, junction sleeves, sealing ends and the like made of thermoplastic or elastomeric materials alone or in combination, characterised in that the moulded parts contain magnesium hydroxide alone or in combination with other metal oxides, metal hydroxides or hydrates, the magnesium hydroxide being the predominant agent imparting tracking resistance and being present in a quantity of 10 - 80 parts, preferably 20 - 60 parts, referred to 100 parts of the base materials, and in that the moulded parts contain carbon black in a quantity of 2 - 15 parts, preferably 4 - 10 parts, referred to 100 parts of the base materials.

**2.** Moulded parts according to Claim 1, characterised in that the base materials are crosslinked.

**3.** Moulded parts according to Claim 2, characterised in that the respective base material is crosslinked by the action of high-energy rays.

**4.** Moulded parts according to Claim 2, characterised in that the respective base material is peroxidically crosslinked.

**5.** Moulded parts according to Claim 2, characterised in that the respective base material is crosslinked by the action of moisture after grafting-on of unsaturated organosilanes.

**6.** Moulded parts according to Claim 5, characterised in that organosilanes having vinyl groups are used as the unsaturated organosilanes.

**7.** Moulded parts according to Claim 2 or one of the following claims, in the form of caps, tubes, tapes, characterised in that these moulded parts are shrinkable after widening or stretching during temperature treatment.

**8.** Moulded parts according to Claim 1 or one of the following claims, characterised in that copolymers of eythlene having an acetate content of 5 - 35 % by weight are used as the base materials.

**9.** Moulded parts according to Claim 1 or one of the following claims, characterised in that copolymers of ethylene having an acrylate content of 3 - 20 % by weight are used as the base materials.

**10.** Moulded parts according to Claim 1 or one of the following claims, characterised in that polymer blends (polyblends) of copolymers of ethylene and ethylene-propylene rubbers are used as the base materials.

## Revendications

**1.** Profiles isolants résistant à des courants de fuite, en particulier des accessoires de câbles et de conducteurs tels que des capuchons, des boîtes de jonction, des boîtes d'extrémité et similaires réalisés dans des matériaux thermoplastiques ou élastomères seuls ou en combinaisons, caractérisés en ce que les profilés contiennent de l'hydroxyde de magnésium seul ou en combinaison avec d'autres oxydes métalliques, des hydroxydes métalliques ou des hydrates, dans lesquels l'hydroxyde de magnésium est le principal composant de résistance aux courants de fuite et est présent en une quantité de 10 à 80 parties, de préférence 20 à 60 parties, sur la base de 100 parties du matériau de base, et en ce que les profilés contiennent du noir de carbone dans une proportion de 2 à 15 parties, de préférence 4 à 10 parties, sur la base de 100 parties du matériau de base.

**2.** Profilés selon la revendication 1, caractérisés en ce que les matériaux de base sont réticulés.

5

**3.** Profilés selon la revendication 2, caractérisés en ce que le matériau de base concerné est réticulé par l'effet d'un rayonnement riche en énergie.

**4.** Profilés selon la revendication 2, caractérisés en ce que le matériau de base concerné est réticulé au moyen de peroxyde.

**5.** Profilés selon la revendication 2, caractérisés en ce que le matériau de base concerné est réticulé, après greffage d'organosilanes insaturés, par effet de l'humidité.

**6.** Profilés selon la revendication 5, caractérisés en ce qu'on utilise des organosilanes insaturés ayant des groupements vinyliques.

**7.** Profilés selon la revendication 2 ou l'une quelconque des revendications suivantes, prenant la forme de capuchons, d'éléments tubulaires, de bandes, caractérisés en ce que les profilés sont capables de se rétracter après extension ou étirage pendant le traitement à température.

**8.** Profilés selon la revendication 1 ou l'une quelconque des revendications suivantes, caractérisés en ce que le matériau de base comprend des copolymères éthylène/acétate, la proportion de ce dernier étant de 5 à 35% en poids.

**9.** Profilés selon la revendication 1 ou l'une quelconque des revendications suivantes, caractérisés en ce que le matériau de base comprend des copolymères éthylène/acrylate, la proportion de ce dernier étant de 3 à 20% en poids.

**10.** Profilés selon la revendication 1 ou l'une quelconque des revendications suivantes, caractérisés en ce que le matériau de base comprend des mélanges de polymères ("polyblends") composés de copolymères d'éthylène et de caoutchoucs éthylène-propylène.

1

2

3

5

6

4

7

Fig.1

8

9

10

11

12

Fig. 2